**Europäisches Patentamt**

**European Patent Office**

**Office européen des brevets**

(19)

(11) Numéro de publication : **0 330 574 B1**

(12)  **FASCICULE DE BREVET EUROPEEN**

(45) Date de publication du fascicule du brevet :
22.04.92 Bulletin 92/17

(51) Int. Cl.⁵ : **B60P 1/48**

(21) Numéro de dépôt : **89400507.3**

(22) Date de dépôt : **23.02.89**

(54) **Véhicule de transport à bras de chargement latéralement mobiles.**

(30) Priorité : **24.02.88 FR 8802243**

(43) Date de publication de la demande :
**30.08.89 Bulletin 89/35**

(45) Mention de la délivrance du brevet :
**22.04.92 Bulletin 92/17**

(84) Etats contractants désignés :
**AT BE CH DE ES FR GB GR IT LI LU NL SE**

(56) Documents cités :
**EP-A- 0 089 614
EP-A- 0 220 560
GB-A- 1 387 688**

(73) Titulaire : **BENNES MARREL
Zone Industrielle Sud
F-42161 Andrézieux-Bouthéon (FR)**

(72) Inventeur : **Lambert, Bernard
Les Charmes Chevagny Les Chevrières
F-71960 Pierreclos (FR)**
Inventeur : **Chalavon, Jacques
Les Chatons Rue du Chemin Vert
F-42340 Veauche (FR)**

(74) Mandataire : **Rinuy, Santarelli
14, avenue de la Grande Armée
F-75017 Paris (FR)**

EP 0 330 574 B1

## Description

L'invention concerne un véhicule, généralement du type camion, comportant une aire de chargement adaptée à recevoir au moins un conteneur.

Ainsi qu'on le sait, il existe des normes (hauteur, largeur, longueur) en matière de conteneurs de chargement, correspondant à des formats normalisés en nombre réduit. Cette normalisation des formats a permis une simplification des opérations de manutention et une optimisation des zones de stockage ou de transport (par avion, par bateau ou par train ...) dès lors que les dimensions de ces zones étaient choisies comme des multiples des formats normalisés.

Dans le même souci d'optimisation en cas de transport routier, on a cherché à utiliser des conteneurs dont la largeur et la hauteur (rajoutée à la hauteur des aires de chargement des camions) s'approchaient au mieux des valeurs maximales admises (gabarits routiers).

Par ailleurs, dans le souci de faciliter les opérations de chargement/déchargement de conteneurs au sol et sur un ou plusieurs camions, sans contrainte trop restrictive quant au lieu de ces opérations, on a déjà cherché à mettre au point des véhicules adaptés à recevoir des conteneurs et munis de leurs propres équipements embarqués de manutention. Ce souhait vaut notamment pour les véhicules transportant des conteneurs légers ("shelter" en anglais).

Cette exigence est pourtant paru s'opposer au souhait précité de pouvoir charger des conteneurs dont les dimensions approchent autant que possible les gabarits routiers. En effet, dès lors que l'on veut charger par l'arrière des conteneurs sur un camion, il faut prévoir, pour des raisons de stabilité, deux bras pivotants disposés latéralement de part et d'autre de la partie arrière de l'aire de chargement de ce camion. Lors des opérations mêmes de chargement/déchargement les conteneurs doivent passer entre ces bras tandis que le camion muni de ces bras doit rester au gabarit routier : il en résulte que du fait de la présence de ces bras les dimensions maximales des conteneurs transportés par camion doivent rester sensiblement inférieures aux gabarits routiers.

L'invention vise à pallier à cet inconvénient en permettant de satisfaire simultanément aux exigences précitées.

On a déjà proposé (voir EP-A-0 220 560) un dispositif de chargement au bennage comportant des bras de manoeuvre télescopiques articulés sur une semelle mobile qui est en appui direct sur le sol. Les organes de puissance associés à ces bras de manoeuvre sont disposés longitudinalement sur les côtés du châssis du véhicule en prenant donc appui sur ce châssis. En configuration repliée, les bras sont rapprochés latéralement et redressés verticalement.

L'invention propose un véhicule de transport comportant une aire de chargement munie de part et d'autre d'une zone arrière de cette aire de chargement d'une paire de bras télescopiques adaptés à venir en prise au moins indirectement avec un conteneur et, sous l'action d'organes de commande à pivoter autour d'un axe horizontal transversal pour le chargement/déchargement de ce conteneur sur l'aire de chargement, caractérisé en ce que ces bras, avec leurs organes de puissance associés, sont articulés respectivement sur deux platines mobiles latéralement entre une position effacée de repos dans laquelle ces platines, ces bras et ces organes de puissance sont entièrement situés dans l'encombrement transversal du véhicule et d'un conteneur porté par ce dernier et une configuration de travail dans laquelle les bras viennent latéralement en saillie par rapport à l'aire de chargement.

Selon des dispositions préférées de l'invention, éventuellement combinables :

– ces platines sont articulées autour d'axes de pivotement verticaux, à proximité d'un bord transversal arrière de l'aire de chargement ;

– les axes de pivotement des deux platines sont décalés longitudinalement pour permettre un croisement des bras et des organes de puissance dans des plans transversaux verticaux différents ;

– en position effacée des platines, les bras télescopiques sont disposés, en configuration rétractée, sont sensiblement orientés parallèlement aux diagonales d'une face arrière d'un conteneur chargé sur l'aire de chargement ;

– les platines sont montées coulissantes parallèlement à un bord transversal arrière de l'aire de chargement ;

– les platines comportent des pieds rétractables adaptés à venir prendre appui au sol ;

– un cadre adapté à coopérer avec des organes d'accrochage prévus aux extrémités libres des bras télescopiques et muni de verrous tournants adaptés à venir en prise avec des pièces de coin dont est muni le conteneur ;

– le cadre comporte une traverse adaptée à coopérer en ses extrémités avec les organes d'accrochage des bras télescopiques, cette traverse ayant une position ajustable le long de ce cadre ;

– le cadre comporte une pluralité de jeux de verrous tournants adaptés à permettre une fixation de ce cadre sur des conteneurs de longueurs différentes ;

– les organes d'accrochage comportent des tronçons tubulaires adaptés à s'emboîter sur des barreaux transversaux entièrement situés dans des cavités ménagées transversalement dans ce cadre.

Des objets, caractéristiques et avantages de l'invention ressortent de la description qui suit, donnée à titre d'exemple non limitatif, en regard des dessins annexés sur lesquels :

– la figure 1 est une vue schématique de dessus d'un véhicule de transport conforme à l'invention, en configuration de transport ;

– la figure 2 est une vue arrière, également en configuration de transport ;

– la figure 3 en est une vue de dessus en une configuration de venue en prise avec un conteneur ;

– la figure 4 en est une vue en élévation en configuration de transport à vide ;

– la figure 5 en est une vue en une configuration intermédiaire, à l'arrêt ;

– la figure 6 est une vue schématique d'un autre véhicule de transport conforme à l'invention ;

– la figure 7 est une vue en élévation du véhicule des figures 1 à 5 avec un même conteneur, d'une part au sol, d'autre part sur ce véhicule ;

– la figure 8 en est une vue de dessus avec un conteneur au sol ;

– la figure 9 est une vue en élévation du véhicule des figures 1 à 5, 7 et 8 en train de charger un conteneur sur un autre véhicule non pourvu des équipements proposés par l'invention ;

– la figure 10 est une vue en élévation de cet autre véhicule en configuration de transport ;

– la figure 11 est une vue en élévation du véhicule des figures 1 à 5 en train de manipuler un conteneur sous un plafond bas ;

– la figure 12 en est une demi-vue de dessous ;

– la figure 13 est un schéma hydraulique du circuit d'alimentation des platines et des bras du véhicule des figures 1 à 5, comportant des électrovannes ; et

– la figure 14 est un schéma du circuit électrique associé à ces électrovannes.

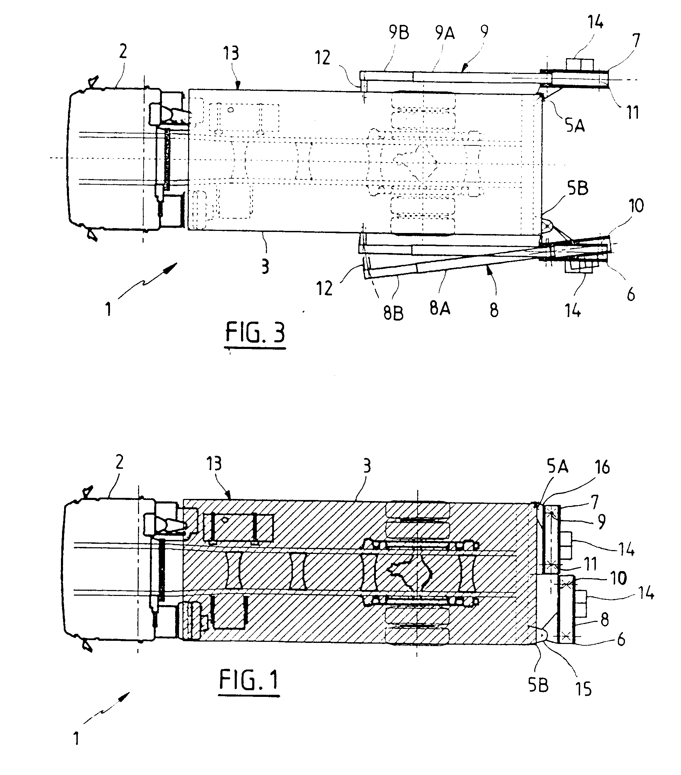

Le véhicule 1 des figures 1 à 5 comporte de manière classique une cabine de pilotage 2 et un châssis 3 porté par des roues 4 et déterminant, derrière la cabine 2, une aire de chargement 5 rectangulaire.

Près de chacun des coins arrières 5A et 5B de cette aire de chargement, sont prévues des platines arrière gauche 6 et arrière droite 7 qui portent chacune un bras 8 ou 9 adapté, en configuration de chargement, à pivoter autour d'un axe horizontal transversal, ainsi qu'un organe de puissance 10 ou 11, ici un vérin hydraulique, destiné à la commande en pivotement dudit bras.

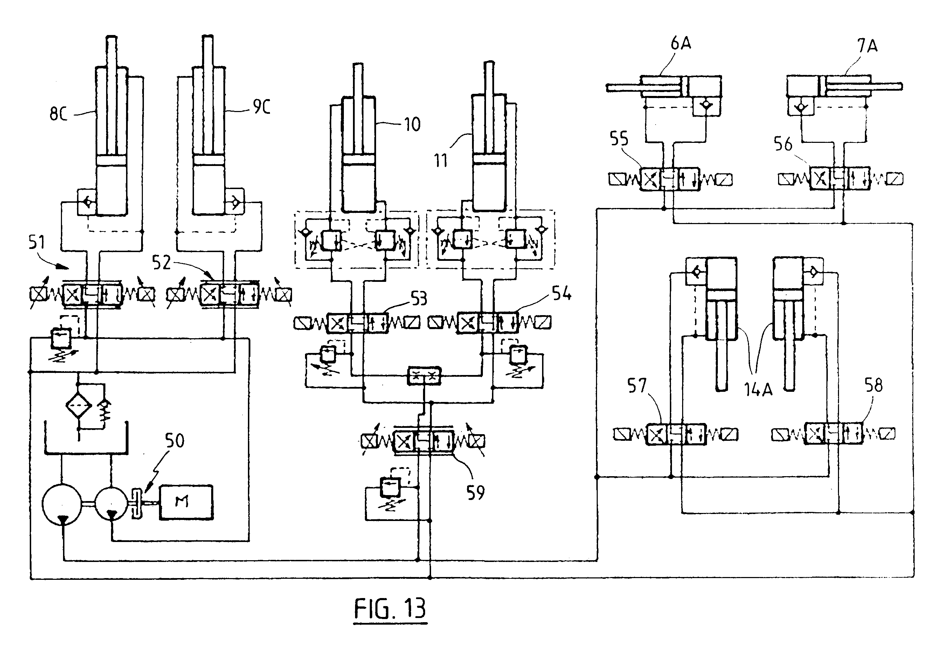

Chacun des bras 8 et 9 est formé d'au moins deux tronçons télescopiques 8A-8B, et 9A-9B dont un tronçon inférieur 8A ou 9A articulé sur la platine 6 ou 7 et un tronçon supérieur 8B ou 9B adapté à coulisser dans le tronçon inférieur sous l'action d'un vérin de déploiement 8C ou 9C (figure 13) situé à la base de ce tronçon inférieur. L'extrémité libre de chacun des tronçons supérieurs 8B ou 9B est munie d'un organe d'accrochage 12 adapté à venir en prise au moins indirectement avec un conteneur 13 à charger ou décharger.

Les platines 6 et 7 sont chacune munies d'un pied ou béquille de stabilisation rétractable 14 adapté à venir, sous la poussée d'un vérin de poussée 14A (voir figure 13), prendre appui au sol lors des opérations de manutention du conteneur 13.

Ces platines sont mobiles latéralement entre une position effacée de repos dans laquelle ces platines et les bras et organes du puissance qu'elles supportent sont entièrement comprises dans la largeur du véhicule 1, et une configuration de travail dans laquelle les bras viennent latéralement en saillie par rapport à l'aire de chargement.

A cet effet, les platines 6 et 7 de la figure 1 sont articulées près des coins arrières 5A et 5B de l'aire de chargement autour d'axes verticaux de pivotement liés à des pattes en saillie 15 et 16.

Pour permettre, en position effacée, un croisement des bras 8 et 9 et des organes de puissance associés 10 et 11 dans des plans transversaux verticaux différents, les axes de pivotement sont décalés par rapport à l'axe longitudinal du camion 1.

Le caractère télescopique des bras 8 et 9 a notamment pour intérêt de permettre que, en position effacée, ces bras puissent non seulement venir en totalité dans l'encombrement en largeur du véhicule 1 et du conteneur 13 qu'il supporte, mais également dans l'encombrement en hauteur du véhicule et du conteneur (disposition des bras selon les diagonales du conteneur). Cela évite notamment tout problème pour passer sous des ponts.

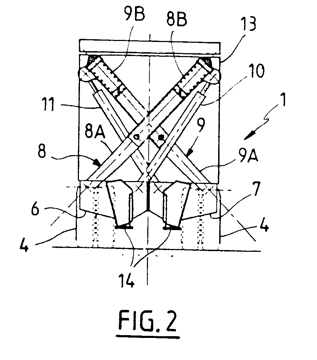

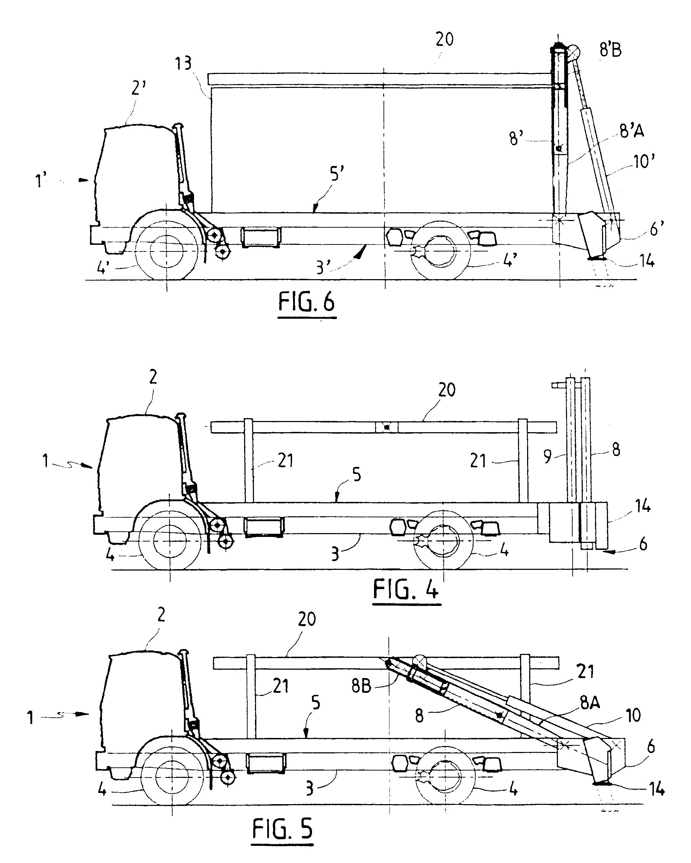

Dans la variante de réalisation de la figure 6 où les signes de référence des éléments similaires à ceux du véhicule des figures 1 à 5 sont affectés d'un indice "prime", les platines 6' et 7' sont non plus pivotantes mais montées coulissantes le long de rails horizontaux (non représentés) longeant l'arête transversale arrière de l'aire de chargement. Cette disposition se révèle moins souple que la disposition des figures 1 à 5 pour s'effacer dans l'encombrement du véhicule chargé puisque, dans cette position effacée, ces bras sont verticaux et non pas inclinés dans un plan transversal comme dans la figure 2.

La suite de la description se réfère au véhicule 1 des figures 1 à 5, mais peut se généraliser en substance au véhicule 1' de la figure 6.

Les bras 8 et 9 viennent avantageusement en prise avec le conteneur 13 de façon indirecte, par l'intermédiaire d'un cadre 20 (aussi appelé "portique" ou "palonnier", ou "spreader" en anglais).

Ce cadre est avantageusement muni de verrous "tournants" (en anglais "twist locks") adaptés à venir en prise avec les pièces de coin normalisées 40 connues en soi (en anglais "corner fitting") dont sont classiquement munis les conteneurs normalisés.

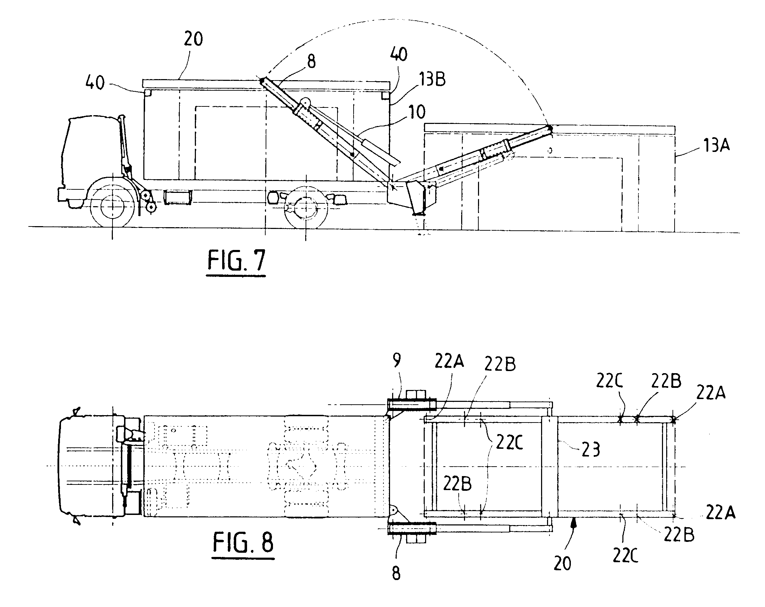

Ainsi qu'il ressort de la figure 8 ce cadre 20 comporte avantageusement une pluralité de jeux de verrous tournants schématisés en 22A, 22B, 22C adaptés à permettre, au choix, la fixation de plusieurs types de conteneurs normalisés différents par leur longueur.

Ce cadre comporte une traverse 23 munie en ses extrémités d'organes d'accrochage (non détaillés sur les figures) adaptés à venir en prise avec les organes d'accrochage 12 des bras 8 et 9.

A titre d'exemple, ces organes d'accrochage sont constitués par des barreaux transversaux situés dans des cavités cylindriques ménagées dans les extrémités de la traverse 23, et les organes d'accrochage 12 des bras sont des tronçons tubulaires adaptés à pénétrer dans ces cavités autour desdits barreaux. La venue en prise de ces tronçons tubulaires 12 dans ces cavités est avantageusement obtenue à la fin du pivotement des platines 6 et 7 en leur position de travail (voir la figure 3).

La traverse 23 a avantageusement une position longitudinalement ajustable (par coulissement et blocage par tout moyen approprié par exemple) ce qui permet de localiser cette traverse au-dessus du centre de gravité du conteneur même si celui-ci chargé de manière non équilibrée.

A vide le véhicule 1 est avantageusement équipé d'un tel cadre 20 porté sur des supports amovibles 21 (voir les figures 4 et 5).

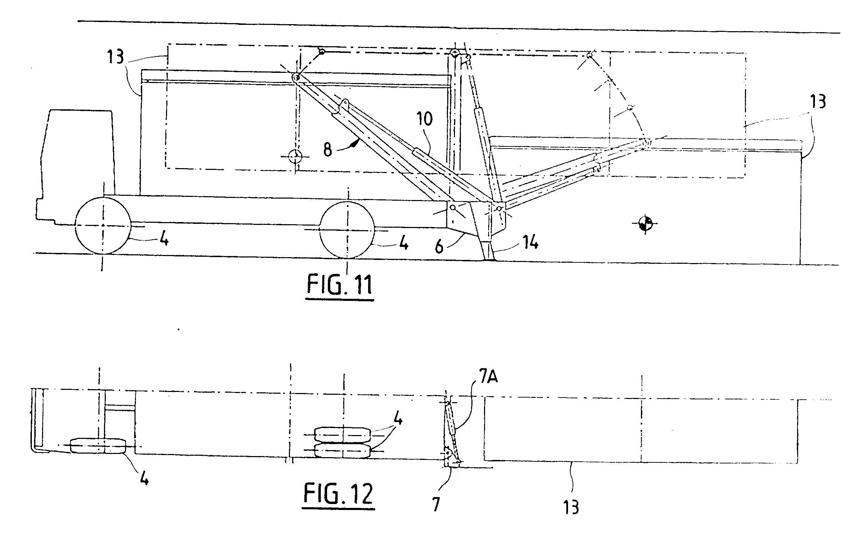

Lorsque le véhicule est placé dans une orientation appropriée par rapport à un conteneur au sol, on fait pivoter les platines 6 et 7 depuis leur position effacée (figure 4) en leur position de travail (figure 5) sous l'action de tout moyen approprié de commande, par exemple des vérins 6A et 7A (voir figures 12 et 13). On soulève le cadre 20, on enlève les supports mobiles 21, et on positionne ce cadre sur le conteneur 13 à charger (voir figure 7 où le conteneur au sol est repéré par la référence 13A).

Après fixation du cadre 20 sur le conteneur, on active les organes de puissance 10 et 11 des bras 8 et 9 et on fait pivoter ces derniers en sorte de charger le conteneur sur le véhicule (à l'état chargé, le conteneur est repéré par la référence 13B à la figure 7).

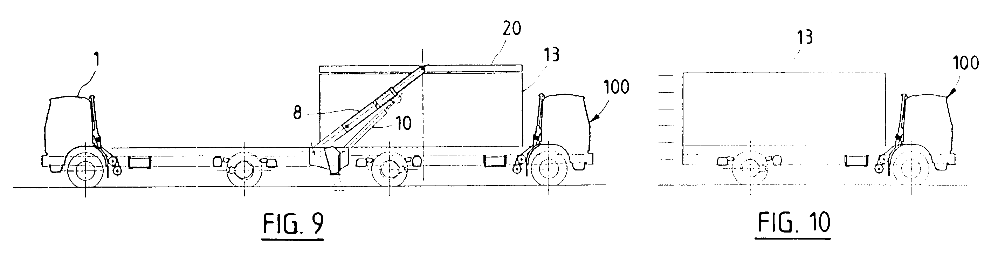

Lorsque plusieurs conteneurs sont à charger sur plusieurs camions, il suffit que l'un d'entre-eux seulement soit équipé des bras 6 et 7. En effet, dans ce cas, le véhicule équipé de ces bras charge successivement sur sa propre aire de chargement les différents conteneurs puis, en une deuxième phase, transfère ce conteneur sur un véhicule normal 100 venu préalablement placer son aire de chargement dans le prolongement de celle du véhicule 1 (voir la figure 9). Après désolidarisation du cadre, ce véhicule 100 peut ainsi partir avec son conteneur (voir figure 10).

Du fait de leur caractère télescopique, les bras peuvent s'adapter à diverses positions de la traverse 23 le long du cadre 20, et donc à des conteneurs de formats différents. En outre, en cas de plafond bas (voir figure 11), il est possible de coordonner l'alimentation des vérins internes à ces bras avec l'alimentation des organes de commande 10 et 11 en sorte de rétracter puis redéployer ces bras lors des phases de soulèvement et d'abaissement du conteneur : cela permet d'obtenir des trajectoires plus plates (horizontales) que la trajectoire en arc de cercle de la figure 7. Cela rend par ailleurs possible de charger plusieurs conteneurs sur un même véhicule.

Les circuits hydrauliques des vérins de pivotement ou de translation des platines, des organes de puissance, et de commande en déploiement des bras télescopiques, sont de tout type approprié et leur structure est à la portée de l'homme de l'art. Il s'agit par exemple, de circuits disjoints indépendants pour chaque vérin (cela permet des mouvements indépendants des bras qui peuvent être très utile lors du chargement/déchargement de conteneurs sur des zones de sol irrégulières) avec possibilité par ouverture d'une vanne de communication entre des tubulures d'alimentation des deux bras, de les synchroniser.

Dans l'exemple représenté à la figure 13, un groupe de pompage 50 permet l'alimentation , d'une part, des vérins 8C et 9C de déploiement des bras 8 et 9, d'autre part, des vérins de puissance 10 et 11 associés à ces bras, des vérins 6A et 7A de manoeuvre des platines et des vérins 14A de déploiement des béquilles 14.

Chacun de ces vérins est alimenté au travers d'un distributeur 51 à 58, les distributeurs 53 et 54 associés aux vérins de puissance étant eux-mêmes alimentés au travers d'un distributeur additionnel 59.

Les distributeurs 51, 52 et 59 sont à commande proportionnelle ce qui donne une grande souplesse d'utilisation. Les autres distributeurs fonctionnent en tout ou rien.

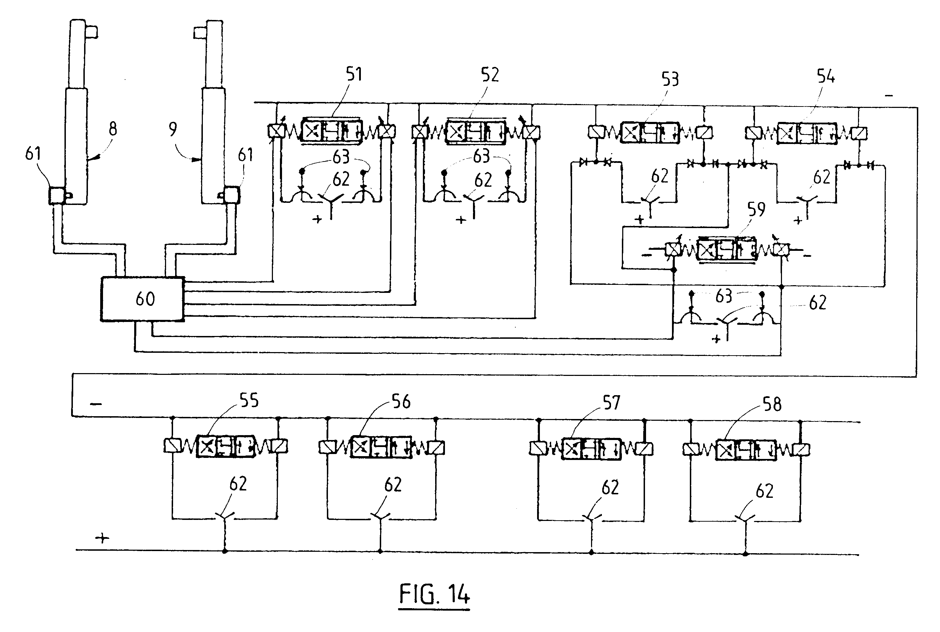

Ces distributeurs sont connectés par un circuit électrique représenté à la figure 14. Il comporte une unité de calcul 60 et des détecteurs angulaires (codeurs) 61 relevant la position angulaire des bras 8 et 9 dont les signaux de mesure sont utilisés pour la détermination des signaux de commande proportionnelle des distributeurs 51, 52 et 59. En outre, des contacteurs 62 sont associés aux divers distributeurs et des manettes 63 de commande manuelle proportionnelle sont associées aux distributeurs 51, 52 et 59.

Il va de soi que la description qui précède n'a été proposée qu'à titre d'exemple non limitatif et que de nombreuses variantes peuvent être proposées par l'homme de l'art sans sortir du cadre de l'invention.

Ainsi par exemple les bras 6 et 7 peuvent aussi, le cas échéant, recevoir en leurs extrémités des câbles ou des chaînes fixées par ailleurs aux pièces de coin des conteneurs. Ces conteneurs peuvent par ailleurs être modifiés en sorte de permettre une prise directe des organes d'accrochage 12 de ces bras.

## Revendications

1. Véhicule de transport (1, 1′) comportant une aire de chargement (5) munie de part et d'autre d'une zone arrière de cette aire de chargement d'une paire de bras télescopiques (8, 9 ; 8′) adaptés à venir en prise au moins indirectement avec un conteneur (13) et, sous l'action d'organes de commande (10, 11), à pivoter autour d'un axe horizontal transversal pour le déchargement de ce conteneur sur l'aire de chargement, caractérisé en ce que ces bras (8, 9), avec leurs organes de puissance associés (10, 11), sont articulés respectivement sur deux platines (6, 7, 6′, 7′) mobiles latéralement entre une position effacée de repos dans laquelle ces platines, ces bras et ces organes de puissance sont entièrement situés dans l'encombrement transversal du véhicule et d'un conteneur porté par ce dernier et une configuration de travail dans laquelle les bras viennent latéralement en saillie par rapport à l'aire de chargement.

2. Véhicule de transport selon la revendication 1, caractérisé en ce que ces platines (6, 7) sont articulées autour d'axes de pivotement verticaux, à proximité d'un bord transversal arrière de l'aire de chargement.

3. Véhicule de transport selon la revendication 22 caractérisé en ce que les axes de pivotement des deux platines sont décalés longitudinalement pour permettre un croisement des bras et des organes de puissance dans des plans transversaux verticaux différents.

4. Véhicule de transport selon la revendication 3, caractérisé en ce qu'en position effacée des platines, les bras télescopiques sont disposés, en configuration rétractée, sont sensiblement orientés parallèlement aux diagonales d'une face arrière d'un conteneur (13) chargé sur l'aire de chargement.

5. Véhicule de transport selon la revendication 1, caractérisé en ce que les platines (6′, 7′) sont montées coulissantes parallèlement à un bord transversal arrière de l'aire de chargement.

6. Véhicule de transport selon l'une quelconque des revendications 1 à 5, caractérisé en ce que les platines (6, 7, 6′, 7′) comportent des pieds rétractables (14) adaptés à venir prendre appui au sol.

7. Véhicule de transport selon l'une quelconque des revendications 1 à 6, caractérisé en ce qu'il comporte un cadre (20) adapté à coopérer avec des organes d'accrochage (12) prévus aux extrémités libres des bras télescopiques et muni de verrous tournants (22A, 22B, 22C) adaptés à venir en prise avec des pièces de coin (40) dont est muni le conteneur.

8. Véhicule de transport selon la revendication 7, caractérisé en ce que le cadre (20) comporte une traverse (23) adaptée à coopérer en ses extrémités avec les organes d'accrochage (12) des bras télescopiques, cette traverse ayant une position ajustable le long de ce cadre.

9. Véhicule de transport selon la revendication 7 ou la revendication 8, caractérisé en ce que le cadre comporte une pluralité de jeux de verrous tournants (22A, 22B, 22C) adaptés à permettre une fixation de ce cadre sur des conteneurs de longueurs différentes.

10. Véhicule de transport selon l'une quelconque des revendications 7 à 9, caractérisé en ce que les organes d'accrochage (12) comportent des tronçons tubulaires adaptés à s'emboîter sur des barreaux transversaux entièrement situés dans des cavités ménagées transversalement dans ce cadre.

## Patentansprüche

1. Transportfahrzeug (1, 1′) mit einer Ladefläche (5), die in ihrem hinteren Bereich beidseits mit ein paar bildenden Teleskoparmen (8, 9; 8′) versehen ist, welche wenigstens indirekt mit einem Container (13) in Eingriff zu bringen und zum Abladen des Containers auf der Ladefläche mittels Antriebsorganen (10, 11) um eine horizontale Querachse schwenkbar sind, **dadurch gekennzeichnet,** daß die Arme (8, 9) mit ihren zugehörigen Antriebsorganen (10, 11) auf zwei jeweils zugeordneten Tragplatten (6, 7, 6′, 7′) schwenkbar gelagert sind, die seitlich bewegbar sind zwischen einer eingezogenen Ruhestellung, in welcher sich die Tragplatten, die Arme und die Antriebsorgane vollständig innerhalb der Querabmessung des Fahrzeugs und des von diesem getragenen Containers befinden, und einer Arbeitsstellung, in welcher die Arme seitlich über die Ladefläche vorstehen.

2. Transportfahrzeug nach Anspruch 1, **dadurch gekennzeichnet,** daß die Tragplatten (6, 7) in der Nähe des hinteren Querrandes der Ladefläche um senkrechte Drehachsen schwenkbar sind.

3. Transportfahrzeug nach Anspruch 2, **dadurch gekennzeichnet,** daß die Drehachsen der beiden Tragplatten in Längsrichtung versetzt sind, so daß sich die Arme und die Antriebsorgane, in unterschiedlichen senkrechten Querebenen liegend, kreuzen können.

4. Transportfahrzeug nach Anspruch 3, **dadurch gekennzeichnet,** daß in der eingezogenen Stellung der Tragplatten die Teleskoparme im zurückgezogenen Zustand im wesentlichen parallel zu den Diagonalen der hinteren Endfläche eines auf die Ladefläche aufgeladenen Containers (13) ausgerichtet sind.

5. Transportfahrzeug nach Anspruch 1, **dadurch gekennzeichnet,** daß die Tragplatten (6′, 7′) parallel zum hinteren Querrand der Ladefläche verschieblich sind.

6. Transportfahrzeug nach einem der Ansprüche 1 bis 5, **dadurch gekennzeichnet,** daß die Tragplatten (6, 7, 6′, 7′) mit zurückziehbaren Beinen (14) versehen sind, welche auf dem Boden abstützbar sind.

7. Transportfahrzeug nach einem der Ansprüche 1 bis 6, **dadurch gekennzeichnet,** daß es einen Rahmen (20) aufweist, welcher zum Zusammenwirken mit an den freien Enden der Teleskoparme angebrachten Eingriffsorganen (12) ausgelegt und mit drehbaren Riegeln (22A, 22B, 22C) versehen ist, die mit Eckstücken 140) am Container in Eingriff zu bringen sind.

8. Transportfahrzeug nach Anspruch 7, **dadurch gekennzeichnet, daß** der Rahmen (20) eine Traverse (23) aufweist, welche mit ihren Enden zum Zusammenwirken mit den Eingriffsorganen (12) der Teleskoparme ausgelegt und in Längsrichtung des Rahmens einstellbar ist.

9. Transportfahrzeug nach Anspruch 7 oder 8, **dadurch gekennzeichnet, daß** der Rahmen eine Mehrzahl satzweise zusammengehörender drehbarer Riegel (22A, 22B, 22C) aufweist, mittels welcher er auf Containern unterschiedlicher Längen befestigbar ist.

10. Transportfahrzeug nach einem der Ansprüche 7 bis 9, **dadurch gekennzeichnet, daß** die Eingriffsorgane (12) Hohlzapfen aufweisen, welche mit Querstäben in Eingriff zu bringen sind, die sich vollständig in Querlöchern im Rahmen befinden.

## Claims

1. Transport vehicle (1, 1') comprising a loading area (5) provided to either side of a rear portion of the loading area with a pair of telescopic arms (8, 9 ; 8') adapted to be engaged at least indirectly with a container (13) and to pivot under the control of control means (10, 11) about a transverse horizontal axis to unload the container onto the loading area, characterized in that the arms (8, 9) together with their respective power means (10, 11) are articulated respectively to two plates (6, 7, 6', 7') mobile laterally between a retracted inoperative position in which the plates, the arms and the power means are entirely located within the transverse overall dimensions of the vehicle and a container carried thereby and an operative configuration in which the arms project laterally relative to the loading area.

2. Vehicle according to claim 1 characterized in that the plates (6, 7) are articulated about vertical pivot axes near a rear transverse edge of the loading area.

3. Vehicle according to claim 2 characterized in that the pivot axes of the two plates are offset longitudinally to enable the arms and the power means to cross over in different vertical transverse planes.

4. Vehicle according to claim 3 characterized in that in the retracted position of the plates the telescopic arms are disposed in a retracted configuration substantially parallel to the diagonals of a rear surface of a container (13) loaded onto the loading area.

5. Vehicle according to claim 1 characterized in that the plates (6', 7') are mounted to slide parallel to a rear transverse edge of the loading area.

6. Vehicle according to one of claims 1 to 5 characterized in that the plates (6, 7, 6', 7') incorporate retractable feet (14) adapted to be placed in contact with the ground.

7. Vehicle according to one of claims 1 to 6 characterized in that it comprises a spreader (20) adapted to cooperate with hooking means (12) provided at the free ends of the telescopic arms and provided with twist locks (22A, 22B, 22C) adapted to be engaged with corner fittings (40) on the container.

8. Vehicle according to claim 7 characterized in that the spreader (20) includes a crossmember (23) adapted to cooperate at its end with the hooking means (12) on the telescopic arms, the crossmember being adjustable in position along the length of the spreader.

9. Vehicle according to claim 7 or 8 characterized in that the spreader comprises a plurality of sets of twist locks (22A, 22B, 22C) whereby the spreader may be fixed to containers of different lengths.

10. Vehicle according to any of claims 7 to 9 characterized in that the hooking means (12) comprise tubular sections adapted to fit over transverse bars entirely situated within cavities formed transversely in the spreader.

FIG. 3

FIG. 1

FIG. 2

FIG. 6

FIG. 4

FIG. 5

FIG. 7

FIG. 8

FIG. 9

FIG. 10

EP 0 330 574 B1

13

10

8

4

4

6

14

FIG. 11

7A

4

4

4

7

FIG. 12

13

13

13

FIG. 13

EP 0 330 574 B1

FIG. 14

EP 0 330 574 B1